# EUROPEAN PATENT SPECIFICATION

(11) **EP 4 243 654 B1**
(45) Date of publication and mention of the grant of the patent: **18.06.2025**
(21) Application number: 21815130.6
(22) Date of filing: 12.11.2021
(51) Int. Cl.: A47C 27/06, B68G 1/00, F16F 1/364, B65D 81/09, B27D 1/08, B27H 1/00, B27H 5/00, B27L 11/00

(54) **A WOODEN SPRING, A WOODEN SPRING FABRIC AND A USE OF THE WOODEN SPRING**
HOLZFEDER, HOLZFEDERGEWEBE UND VERWENDUNG DER HOLZFEDER
RESSORT EN BOIS, TISSU DE RESSORT EN BOIS ET UTILISATION DU RESSORT EN BOIS

(30) Priority: 12.11.2020 EE 202000015; 13.11.2020 EE 202000017
(43) Date of publication of application: 20.09.2023
(60) Divisional application: 25175033.7
(73) Proprietor: RAIKU Packaging OÜ, 72103 Järva county (EE)
(72) Inventor: RANDSBERG, Rain, 11414 Tallinn (EE)
(74) Representative: Moosedog Oy
(86) International application number: PCT/EP2021/081606
(87) International publication number: WO 2022/101457

(56) References cited:
- GB-A- 1 153 801
- JP-A- 2009 240 449
- US-A- 2 457 504
- US-B2- 10 288 139

## Description

### TECHNICAL FIELD

The present disclosure relates generally to the field of packaging materials, more specifically to packaging materials and insulating materials made of strips of wood.

### BACKGROUND

Wooden wool, which consists of long and thin wooden chips chaotically stacked on top of each other, is widely known in the world as the packaging filling material. Patent application JP2009240449A describes the use of helically twisted wood chips having a thickness of 50500µm, preferably 50-150µm, a stretched-out length 1-5 cm and a width preferably 1-10 mm. Twisted wood chips get their spiral twisted shape from wood chips during cutting. The pitch of such wood chips varies along the chip and is not equal in different parts of the chip, also the diameter of the cross-section is different in different parts of the wood chip. Thus, such wood chips are not suitable for making fabric like material.

Wooden wool has historically been used to protect fragile items, mainly as a filling material for packages, but nowadays it is used relatively little and mainly for its decorative nature, as it provides uneven and limited protection and during handling generates a lot of waste in the form of crumbling wooden wool particles and needs gloves during handling, as the edges of the wooden wool may be cut when the wood wool is torn.

In addition, it takes a lot of wooden wool in weight, because to make the wooden wool easier to handle, the wood is cut into thin chips. Cutting the wood in turn, loses the strength of the wood.

For the reasons listed above, package-based pellets, blister film or modifications thereof are mainly used as packaging fillers today, but there is a global trend to reduce the use of plastics and move towards the use of biodegradable materials, so there is a need for easy-to-handle and low-cost biodegradable packaging fillers.

Wooden wool, packaging pellets and bubble wrap have an important additional disadvantage, namely that they take up a lot of space physically, which makes them expensive to transport and store. Today, bubble wrap or its modifications are mainly used to surround and fill packaging items, but there is a global trend to reduce the use of plastic and move towards the use of biodegradable packaging materials, so there is a need for novel, low cost and biodegradable bubble wrap. The bubble wrap has a significant drawback, the bubble wrap physically takes up a lot of space, which makes it expensive to transport and store.

For example patent application GB1153801A discloses curled wood wool made by using a comb method. Such wood wool strands doesn't have a homogeneous shape and therefore doesn't enable to form wooden spring fabric by interlacing the wooden springs to each other side by side as disclosed in the present application. Moreover, the wooden wool strands according to GB1153801A are not compressible because due to the small width, the wood wool strands would break.

Another example, patent application JP2009240449A, discloses spiral wooden chips which twists have uneven twists. It is not possible to use such chips for forming a wooden spring fabric by interlacing the chips with each other.

Yet another example, patent US10288139B2, discloses wooden coil springs for mattresses and method and devices for making such wooden coil springs. Such wooden coin springs are not interlaceable to each other to form and wooden spring fabric. In US10288139B2 the coil is made by winding the slat around the reel. Such wooden coils cannot be interlaced side by side to each other. The device of US10288139B2 thus does not enable to make wooden springs for forming a wooden springs fabric.

Therefore, in light of the foregoing discussion, there exists a need to overcome the aforementioned drawbacks associated with how to form a wooden fabric.

### SUMMARY

An aim of the present disclosure is to provide a packaging material that overcomes the problems encountered in prior art. An aim of the present disclosure is to provide an easy-to-use, yet inexpensive, wood biodegradable package filler that makes the most of the strength of the wood and which, in addition, would take up less space during transportation and storage. In order to achieve the aim of the present disclosure, a package filler from wooden springs with novel shapes and features that facilitate handling is provided. An aim of the present disclosure is to provide a novel biodegradable fabric material having bubble plastic like physical protection properties, which is as easy to use as the bubble plastic film and which producing cost is the same or cheaper than the bubble film and which when rolled up takes less space and thus has lower transport and storage costs than the bubble film. In order to achieve the aim of the present disclosure, the inventor provides a novel fabric material comprising wooden springs having helical coils and cross-sectional shape, wherein the wooden springs are interlaced with each other, the wooden springs are interlaced with at least two side by side wooden springs to form a wooden spring fabric.

The present disclosure provides a wooden spring and wooden spring fabric to solve the technical problem how to form a wooden spring fabric and a use of the wooden spring fabric as defined in the appended independent claims to which reference is made to. Advantageous features are set out in the appended dependent claims.

Embodiments of the present disclosure eliminate the aforementioned problems in the prior art, and enable to provide a biodegradable material for packing material, for package filling material, for packaging, for making a curtain, for making a mattress, for making an interior or design elements. Additional aspects, advantages, features and objects of the present disclosure would be made apparent from the drawings and the detailed description of the illustrative embodiments construed in conjunction with the appended claims that follow.

### BRIEF DESCRIPTION OF THE DRAWINGS

For the purpose of illustrating the present disclosure, exemplary constructions of the disclosure are shown in the drawings, with reference to the following diagrams wherein figure:
FIG. 1 shows a first embodiment of a wooden spring in a top view with end view;
FIG. 2 shows an isometric view of the first embodiment of the wooden spring;
FIG. 3 shows an enlarged plan view of a section of the wooden spring according to the first embodiment with an end view;
FIG. 4 shows side views of the embodiments of the wooden springs having different coil directions;
FIG. 5 shows a side view of an embodiment of a wooden spring having tight pitch coils;
FIG. 6 shows an enlarged sectional side view of the embodiment of the wooden spring having tight pitch coils;
FIG. 7 shows side view of embodiments of wooden springs having different variable pitch lengths;
FIG. 8 shows an isometric view of an embodiment of a first type of a first and a second end of a wooden spring;
FIG. 9 shows an isometric view of embodiments of a second and third type of a first and a second end of a wooden spring;
FIG. 10 shows a side of an embodiment of splitting a wooden spring with an end view;
FIG. 11 shows an enlarged sectional end view of the embodiment of splitting the wooden spring;
FIG. 12 shows an isometric view of the embodiment of splitting the wooden spring;
FIG. 13 shows an isometric view of an embodiment of joining wooden springs;
FIG. 14 shows an isometric view of another embodiment, wherein two wooden springs are joined;
FIG. 15 shows a top view of an embodiment of a wooden fabric interlaced of the wooden springs having a circular cross-sectional shape;
FIG. 16 shows an end view of the embodiment of the wooden fabric interlaced of the wooden springs having a circular cross-sectional shape;
FIG. 17 shows a side view of an embodiment of the wooden fabric interlaced of the wooden springs having a circular cross-sectional shape;
FIG. 18 shows a top view of an embodiment of a wooden fabric interlaced of the wooden springs having an elliptical cross-sectional shape;
FIG. 19 shows an end view of an embodiment of the wooden fabric interlaced of the wooden springs having the elliptical cross-sectional shape;
FIG. 20 shows a side view of an embodiment of the wooden fabric interlaced of the wooden springs having an elliptical cross-sectional shape;
FIG. 21 shows a top view of an embodiment of a wooden fabric interlaced of the wooden springs having a chain link-shaped cross-sectional shape;
FIG. 22 shows an end view of an embodiment of the wooden fabric interlaced of the wooden springs having the chain link-shaped cross-sectional shape;
FIG. 23 shows a side view of an embodiment of the wooden fabric interlaced of the wooden springs having the chain link-shaped cross-sectional shape;
FIG. 24 is a top view of an embodiment of the wooden fabric interlaced of inclined wooden springs having the circular cross-sectional shape;
FIG. 25 shows a top view of an embodiment of the wooden fabric lengthwise interlaced of the wooden springs having the circular cross-sectional shape;
FIG. 26 shows an end view of an embodiment of the wooden fabric longitudinally interlaced of the wooden springs having the circular cross-sectional shape;
FIG. 27 shows a side view of an embodiment of the wooden fabric longitudinally interlaced of the wooden springs having the circular cross-sectional shape;
FIG. 28 shows a top view of an embodiment of the wooden fabric normal interlaced of the wooden springs having the circular cross-sectional shape;
FIG. 29 shows an end view of the embodiment of the wooden fabric normal interlaced of the wooden springs having the circular cross-sectional shape;
FIG. 30 shows an isometric view of the embodiment of the wooden fabric normal interlaced of the wooden springs having the circular cross-sectional shape;
FIG. 31 shows a top view with an end view of a single wooden spring having the circular cross-sectional shape;
FIG. 32 shows an isometric view of the single wooden spring having the circular cross-sectional shape;
FIG. 33 shows an enlarged top view with an end view of a section of the single wooden spring having the circular cross-sectional shape;
FIG. 34 shows a top view of an embodiment, wherein the wooden fabric is formed of multiple wooden springs joined.

### DETAILED DESCRIPTION OF EMBODIMENTS

The following detailed description illustrates embodiments of the present disclosure and ways in which they can be implemented. In one aspect, an embodiment of the present disclosure provides a wooden spring formed of a strip of wood for forming wooden spring fabric, wherein the wooden spring has a homogeneous shape, the wooden springs are interlaceable side by side with at least two other wooden springs and the wooden spring comprises a helix having a first end and a second end, wherein the first end has diameter d2 and the second end has diameter d3, and plurality of coils between the first end and second end of the helix, wherein an average thickness a of the helix is 0.2-2.0 mm; an average width b, b2 of the helix is 2-10 mm; an average diameter d of the coil is 6-60 mm; an average pitch s of the coil is 4-40 mm; and a stretched-out length I of the wooden spring is 10-5000 mm.

The dimensions of the wooden springs can vary widely, depending on the intended use of the fabric and the need for strength. The average diameter of the coils of wooden springs d is preferably in a range from 8 to 16 mm. The average pitch s of the coils of wooden springs is preferably in the range of 7-14 mm. According to the embodiments of the present disclosure the dimensions of the wooden spring may be as follows.

The average thickness a of the helix thus can be from 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.6., 1.65, 1.7, 1.75. 1.8, 1.85, 1.9 or 1.95 mm up to 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.6., 1.65, 1.7, 1.75. 1.8, 1.85, 1.9, 1.95 or 2.0 mm. The average width b, b2 of the helix thus can be from 2, 2.5, 3, 3.5, 4, 4.5, 5, 5.5, 6, 6.5, 7, 7.5, 8, 8.5, 9 or 9.5 mm up to 2.5, 3, 3.5, 4, 4.5, 5, 5.5, 6, 6.5, 7, 7.5, 8, 8.5, 9, 9.5 or 10 mm. The average diameter d of the coil thus can be from 6, 8, 10, 12, 14, 16, 18, 20, 22, 24, 26, 28, 30, 32, 34, 36, 38, 40, 42, 46, 48, 50, 52, 54, 56 or 58 mm up to 9, 12, 15, 18, 21, 24, 27, 30, 33, 36, 39, 42, 45, 48, 51, 54, 57 or 60 mm. The average pitch s of the coil thus can be from 4, 6, 8, 10, 12, 14, 16, 18, 20, 22, 24, 26, 28, 30, 32, 34, 36 or 38 mm up to 6, 8, 10, 12, 14, 16, 18, 20, 22, 24, 26, 28, 30, 32, 34, 36, 38 or 40 mm. The stretched-out length I of the wooden spring thus can be from 10, 100, 200, 300, 400, 500, 600, 700, 800, 900, 1000, 1200, 1400, 1600, 1800, 2000, 2200, 2400, 2600, 2800, 3000, 3200, 3400, 3600, 3800, 4000, 4200, 4400, 4600 or 4800 mm up to 50, 150, 250, 350, 450, 550, 650, 750, 850, 950, 1250, 1500, 1750, 2000, 2250, 2500, 2750, 3000, 3250, 3500, 3750, 4000, 4250, 4500, 4750 or 5000 mm.

The length of the strip of wood to be processed to the wooden spring, depending on the wood material from which the strip of wood is cut and a purpose of the use of the wooden spring, may be from few millimeters to the 5-6 meters. E.g., to obtain a wooden spring having free length of about 40 cm, a strip of wood of 1.3 meters may be used when a tubular spring forming means having diameter of about 8 millimeters is used.

In an embodiment of the wooden spring, wherein a position of the first end is different than a position of the second end, the wooden spring comprises at least one of the following a distance of the first end or the second end from a first coil is less than the average pitch; the first end is at least partially turned onto an outer side of the wooden spring; the second end is at least partially turned onto an outer side of the wooden spring; the first end is at least partially turned onto an inner side of the wooden spring; the second end is at least partially turned onto an inner side of the wooden spring. Such different positions of the first end and the second of the wooden spring allow better use of the wooden springs in packaging and package filling. I.e., in order to make the ends of wooden springs safer, to avoid getting stuck in each other with ends and to make the appearance of wooden springs more correct, the ends of the wooden springs are turned next to the coils, i.e., the distances from the ends of the wooden spring to the coil of the wooden spring next to the end is less than the average length of the pitch of the wooden spring.

According to alternative solutions of the ends of the wooden spring, the lower end of the wooden spring is partially turned on the outside of the wooden spring, or the upper end of the wooden spring is turned on top of the inner side of the previous wooden spring. Such different positions of the first end and second end of the wooden spring can be achieved by after obtaining the wooden spring from the device configured to provide a shape of helix to a strip of wood, the corresponding end of the wooden spring is gripped between the pliers and bent to the desired position, at the same time the bent end of the wooden spring is compressed and heated to deform the wood and to retain corresponding shape of the end of the wooden spring. Thus, in an aspect, the wooden springs can be used for packing material, for package filling material, for packaging, for making a curtain, for making a mattress, for making an interior or design elements.

According to an embodiment, a filling material of the wooden spring package comprises wooden springs formed of helix shaped strips of wood having an average thickness a, an average width b and stretched out length I, wherein instead or preparing the wooden chips by cutting, the wooden springs are made using a method of making wooden springs similar to the screw line, medium diameter d and the average pitch of the coils s, instead of those produced by cutting the strips; a - 0,2-2 mm, b - 1-10 mm, I - 10-5000 mm, d - 6-60, s - 4-40mm.

In order to save storage and transport space, the wooden springs are packaged by compressed at the ends in the longitudinal direction of the wooden springs. To facilitate the transport and storage of the wooden springs, the wooden springs are compressed at the ends and packed in a package shorter than the free length of the wooden springs, which saves 1.5-3 times space.

The wooden spring having a homogeneous shape, and interlaceable side by side with at least two other wooden springs for forming wooden spring fabric, can be made with a device configured to provide a shape of helix to a strip of wood and which maintains and dries the helix of a strip of wood during the drying of the strip of wood.

Alternatively, or optionally, other drying methods may be used to achieve additional effects. Such drying methods may e.g., following. Using a microwave drying enables to dry the strips of wood inside, this drying method further allows to increase the speed of drying process without burning the strips of wood. Using a vacuum drying enables to decrease the boiling point of moisture of the wood and drying takes place more intensively. Using conductive drying is more effective for drying veneer. One type of conductive drying is high-frequency drying, wherein the material is placed between electric plates, where high-frequency oscillations occur. As a result, heat begins to build up inside the material. Another type of conductive drying is radiation drying, in which heat is transferred to a material by radiation. During drying in the device configured to provide a shape of helix to a strip of wood, which maintains and dries the helix of a strip of wood during the drying of the strip of wood, the content of moisture is dried up to 0.001%-7%, preferably 0.5-5%.

Another way to prevent side by side wooden springs from getting into each other, is to prepare wooden springs in such a way that the average width of the coil of the wooden spring b2 is greater than the average distance between the coils of the wooden spring c2 being side by side. The third way to prevent side by side wooden springs from getting into each other is to prepare wooden springs in such a way that the length of the wooden spring pitch is variable in the longitudinal direction of the wooden spring.

In order to allow several wooden springs to be added successively to each other, at least one average diameter d2 of the part of the end of the wooden spring is smaller in absolute than the average diameter of the wooden spring d1, and the part of the end of the wooden spring having the smaller average diameter d2 is partially pushed into the part of the end of the wooden spring having the average diameter d1. In this way, 2-1000 wooden springs can be connected in series, which in the case of a longer composite wooden spring are, for example, wound into a roll, and the user can easily separate sections of the timber spring by pulling. In an embodiment of the wooden spring, the average diameter d2 may be also smaller than the average diameter d3. This enables more efficiently to join the wooden springs to each other by inserting the one end of the one wooden spring having smaller diameter into the second end of the second wooden spring having bigger diameter. At the same time the wooden springs joined together are also detachable from each other by pulling.

In an embodiment, the wooden spring comprises one or more breaking markers. The breaking marker may be an incision cut on the side of the wooden spring, a visual marking or both an incision and visual marking. The incision may be V-shaped. The visual marking may be colored or burnt. In order to allow the accessibility of wooden springs to be broken into sections of wooden springs of the desired length, at least one partial incision has been made on the side of the wooden spring to facilitate the breaking of the wooden spring, and that at least one visually distinguishing mark has been made on the side of the wooden spring to indicate the incision facilitating the breaking of the wooden spring.

A wooden spring fabric material can be formed of wooden springs having different cross-sectional shape. The cross-sectional shape of the wooden spring according to the present disclosure may be circular, elliptical, chain-linked shaped, wherein the chain-linked cross-sectional shape comprising two semicircular sections A having radius R, wherein the two semicircular sections are connected from the ends with two intermediate line segments B.

The wooden springs can be made of any wood, preferred are the types of wood from which the veneer and plywood is made. E.g., due to its color and price, aspen and birch are especially suitable. Aspen is also softer than birch, thus can be used without soaking or moisturizing. In case birch is preferred then soaking enables to achieve wooden springs having better quality. If the raw wooden material used for making the wooden springs is not dried then soaking may not be needed. However, soaking improves e.g., flexibility and formability of the strip of wood to be formed to the wooden spring and the wooden spring to be obtained has better quality and more homogenous shape. Similarly, the wooden springs may be made of any other at least partially woody herb, such as bamboo, reed, etc. The wooden springs may be made of the strips of wood directly cut from the wooden material or the wooden material may be processed into the veneer and then the strips of wood used for making the wooden springs are cut from the veneer. E.g., about 1 square meter of veneer enables to obtain about 1 square meter of wooden spring fabric. As e.g., aspen is softer then sanding or polishing may not be needed.

For a greater strength, the wood is cut into strips of wood as possibly in the direction of wood fibers. When the veneer is cut, it cools down, which reduces the flexibility properties. To increase the flexibility of the strips of wood, the strips of wood are soaked in water at 70-100 degrees before being fed into the device configured to provide a shape of helix to a strip of wood. The strips of wood may be made from the wood material such as wooden blocks. The wooden blocks are pre-soaked, the pre-soaked wooden blocks are cut into veneer boards, the veneer boards are cut into strips of wood along the wood fibers. The moisture content of the wood may be increased about up to 30% to the maximum moisture content of the corresponding wood, e.g., up to 60%-120%. In order to use and recover veneer and plywood waste, the strips of wood are cut from veneer or plywood waste.

Pre-soaking or additional soaking may be needed if the wooden material is not moisturized before cutting the strips of wood. Instead of additional soaking, it is more efficient to use steaming. The heat and humidity applied by the steam treatment of the wooden springs make the wooden spring flexible, which makes it easier to shape the wooden spring or to shape the ends of the wooden spring. Alternatively, the step of categorization may be carried out after obtaining the wooden string.

Determining the quality of the strip of wood enables to detect e.g., the quality of the strip of wood and at first sort out those strips of wood which are not suitable for making the wooden springs, and secondly to sort the strips of wood into quality groups based on the determined parameters and purpose of use of the wooden springs to be obtained. Such criteria to be detected by the machine vision system can be e.g., wood structure failures, absence or number of knots, cracks, curvature, fungal damage, oblique fibers, and other failures. Other types of quality parameters that can be determined by the machine vision system are e.g., related to the physical parameters such as thickness, length, cross-sectional shape, color. Third type of quality criteria to be determined by the machine vision system is the surface roughness of the strip of wood. This enables to decide whether the strip of wood or the wooden spring to be obtained needs any sanding or polishing to make the surface smoother.

Automated sorting is used to sort out unsuitable strips of wood and to sort the strips of wood by quality according to, for example, color, size and number of loose wood fibers, and so on. The sorting process of the strips of wood can take place after the strips of wood have been cut or at any time after the wooden strips have been cut, for example after sanding the strips of wood or after removing the finished wooden springs from the dryer or before packing.

To prevent side by side wooden springs from getting into each other, the helix of some wooden springs is right-handed, and the helix of some wooden springs is left-handed.

In an aspect, an embodiment of the present disclosure provides a wooden spring fabric comprising the wooden springs according to the embodiments of the present disclosure, wherein two or more side by side wooden springs are interlaced to each other through the coils of the wooden springs. The wooden springs may be interlaced in a single layer to form the wooden spring fabric according to the present disclosure. In such embodiments the wooden spring fabric is flexible and has excellent properties for packaging, package filling material, packing material, etc. Alternatively, to obtain stronger properties of the wooden spring fabric, according to an embodiment, the wooden springs may be interlaced so that the interlaced wooden springs form a multi layered and/or multi columnar wooden spring fabric.

First, the wooden spring fabric is formed of wooden springs having circular cross-sectional shape. The term "circular cross-sectional shape" referring to an alternative embodiment in the present disclosure means that the cross-section of the wooden springs is circular.

Second, the wooden spring fabric is formed of wooden springs having a cross-section which has an elliptical shape in the direction of the longer semiaxis of the longer side of the wooden fabric material. The term "elliptical cross-sectional shape" referring to an alternative embodiment in the present disclosure means that the cross-section of the wooden springs is elliptical in the direction of the longer semiaxis of the longer side of the wooden fabric material. The dotted line k2 illustrates the imaginary longer side of the fabric material. The use of wooden springs having an elliptical cross-sectional shape increases the length of the fabric material at the same amount of material, secondly reduces the thickness of the wooden spring fabric, and thirdly makes the side surface of the wooden spring fabric in the direction of the normal of the side surface elastically deformable and more easily compressible.

Thirdly, the wooden spring fabric is made of wooden springs having chain link shaped cross-section. I.e., comprising two semicircular sections A having radius R, wherein the two semicircular sections are connected from the ends with two intermediate line segments B. The term "chain link shaped cross-section" referring to an alternative embodiment in the present disclosure means that the cross-section of the wooden springs comprises two semicircular sections A having radius R, wherein the two semicircular sections are connected from the ends with two intermediate line segments B. The use of wooden springs having the chain link shaped cross-section first increases the length of the fabric material to the maximum at the same amount of material, secondly reduces the thickness of the wooden spring with the maximum amount of material and thirdly makes the fabric material maximally collapsible in the longitudinal direction to save space during transport and storage.

The wooden springs according to the present disclosure can be interlaced into each other by the coils of the wooden springs to form the wooden fabric material, wherein different interlacing positions of the wooden springs can be used.

According to the embodiments of the present disclosure, the axes of the wooden springs in respect of the side of the wooden fabric may be at angle α 70-115 degrees or angle β 25-65 degrees or alternatively the axes of the wooden springs may be oriented in the direction of the longer side of the wooden fabric or oriented in the direction of the normal n of the side surface of the wooden spring fabric.

A first alternative position for interlacing the wooden springs is cross braiding. I.e., the term "cross braiding" means that the axes s1 of the wooden springs are at an angle α in respect of the side of the wooden spring fabric, wherein the angle α is 70-115 degrees, preferably 85-90, 85-95 or 88-90 degrees. The dotted line k1 illustrates the imaginary side of the fabric material. The use of cross-braiding makes the wooden spring fabric in the longitudinal direction easy to roll and to be partially foldable and not foldable.

Another position for interlacing the wooden springs is inclined braiding, i.e., the axes s3 of the wooden springs are at an angle β in respect of the side of the wooden spring fabric, wherein the angle β is of 25-65 degrees or 30-60 degrees, preferably 40-50 or 42-48 degrees. The dotted line k3 illustrates the imaginary side of the fabric material. The first advantage of inclined braiding is that no wood debris is formed when the wooden spring fabric is cut perpendicular to the edge of the wooden spring fabric. Another advantage of inclined braiding is that when the wooden spring fabric is wrapped in a square shape around the sides of an object to be protected, the wooden spring fabric has similar bending and movement properties with respect to the sides of the object to be protected.

A third position for interlacing the wooden springs is longitudinal braiding. I.e., the axes s4 of the wooden springs are oriented in the direction of the longer side of the wooden spring fabric. The dotted line k4 illustrates the imaginary side of the fabric material. The use of longitudinal braiding makes the wooden spring fabric easy to roll and in the direction of the shorter side to be partially foldable and unfoldable.

The fourth position for interlacing the wooden springs is normal braiding. I.e., the axes s5 of the wooden springs are oriented in the direction of the normal n of the side surface of the wooden spring fabric, and the wooden springs are interlaced with at least four side by side wooden springs. The dotted line k5 illustrates the imaginary side of the fabric material. The use of a normal braiding makes the side surface of the wooden spring fabric material in the direction of normal n elastically deformable and easily compressible, thus being suitable for fixing the objects to be packed inside the package and filling the empty space inside the package.

In order to tint the wooden springs, the wooden springs are covered with a layer of a toning agent. To obtain lighter tone wooden springs, the strips of wood or wooden springs are bleached or the wooden springs are covered with a layer of white paint or a layer of paint that gives a white tone. In order to protect the wooden springs from moisture, the wooden springs are covered with a protective layer against moisture. To maintain the shape and strength of the wooden springs in a humid environment, the wooden springs can be coated with a layer of varnish, paint, oil or stain. In order to protect the wooden springs from damage to the fungus, the wooden springs are impregnated or covered with a fungicide. To change the color of the wooden springs, the wooden springs are covered with a layer of paint. To change the color of wooden springs e.g., to green, to pink, to yellow, to blue, etc. the wooden springs are covered with a layer of paint or a layer of paint that gives the desired shade. To speed up the process of soaking the wood and increase the flexibility of the wood, the wood is soaked in water at 30-100 degrees, preferably 70-90 degrees.

In an embodiment of the present disclosure a wooden spring comprising a strip of wood, wherein the wooden spring has an average thickness a, an average width b and a stretched-out length I, wherein coils of the wooden spring are formed into a helical shape using the method for making the wooden spring, wherein the coils have an average diameter d and an average pitch s, wherein a is 0,2-2 mm, b is 2-10 mm, I is 10-5000 mm, d is 6-60 mm, s is 4-40 mm.

In an embodiment, the average diameter d may be in a range 6-60 mm, preferably 7-12 mm or 8-16 mm. In an embodiment, the average pitch s may be in a range 4-40 mm or 7-14 mm, preferably 5-10 mm. In an embodiment, the stretched-out length I may be in a range 500-2000mm or 600-1600 mm. According to an embodiment, a helix of the wooden sprig is right-handed or left-handed. According to an embodiment, an average width b2 of a coil of the wooden spring is greater than the average distance c2 between the coils of the wooden spring being side by side. This enables to prevent the wooden springs from getting into each other when the wooden springs are in use. According to an embodiment, the average pitch s in the longitudinal direction of the wooden spring may be variable. According to the embodiments, the wooden spring may be covered with a layer of moisture protection, a layer of toner or a layer of paint.

According to some embodiments of the present disclosure the wooden spring may further comprise at least one of the following: a distance of an end of the wooden spring from the first turn of the wooden spring is less than the length of the average step of the wooden spring; the end of the wooden spring is at least partially turned onto the outer side of the wooden spring; the end of the wooden spring is at least partially turned on the inner side of the wooden spring.

According to some embodiments of the present disclosure the wooden spring may further comprise at least one of the following: at least one, at least partial incision is made in the sides of the wooden spring to facilitate breaking of the wooden spring; at least one visually distinguishing mark is made on the side of the wooden spring to indicate an incision to facilitate the breaking of the wooden spring.

According to some embodiments of the present disclosure the wooden spring may further comprise at least one average diameter d2 of the part of the end of the wooden spring is smaller in absolute than the average diameter of the wooden spring d1, and the part of the end of the wooden spring having the smaller average diameter d2 is partially pushed into the part of the end of the wooden spring having the average diameter d1.

The wooden spring according to the present disclosure can be packaged by compressing the wooden spring at its ends along the axis of the wooden spring. According to the embodiments of the present disclosure the wooden springs can be interlaced into a wooden fabric. The wooden fabric according to the present disclosure is interlaced of wooden springs comprising helix shaped strips of wood, the wooden springs are interlaced with at least two side by side wooden springs to form a wooden spring fabric. According to an embodiment, the axis of the wooden springs of the wooden fabric are at 70°-115° or 85°-95° angle α in respect of the longer side of the wooden fabric. According to an embodiment, the axis of the wooden springs of the wooden fabric are at 30°-60° or 40°-50° angle β in respect of the longer side of the wooden fabric.

In an embodiment, the axes of the wooden springs are oriented to the normal of the side surface n of the wooden fabric material, and the wooden springs are connected to each other by interlacing four side by side wooden springs.

According to an embodiment, the cross-sectional shape of the wooden springs is elliptical and oriented to the longer semiaxis of the longer side of the wooden fabric material made of wooden springs. According to an embodiment, the cross-sectional shape of the wooden springs is chain link shaped comprising two semicircular sections A having radius R, wherein the two semicircular sections are connected from the ends with two intermediate line segments B. According to an embodiment, the cross-sectional shape of the wooden springs is circular.

### DETAILED DESCRIPTION OF THE DRAWINGS

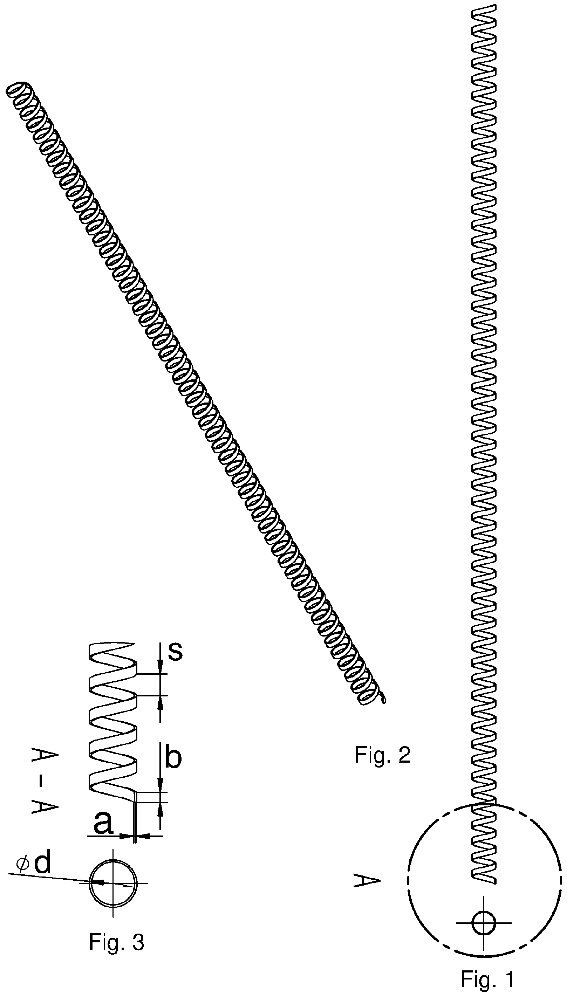

Figures FIG. 1-13 show embodiments of the wooden springs. A thickness a of a coils the wooden springs a is 0.2-2.0 mm, preferably 0.4-0.6 mm, width b is 2-10 mm, preferably 3-6 mm, stretched out length I 0.1-5 meters (m), preferably 0.5-2 m. The wooden springs are made in helical, i.e., tension spring shape. The outer diameter of the coils of the wooden springs d is 6-60 mm, preferably 7-12 mm and the pitch of the coils of the wooden springs is 4-40 mm, preferably 5-10 mm.

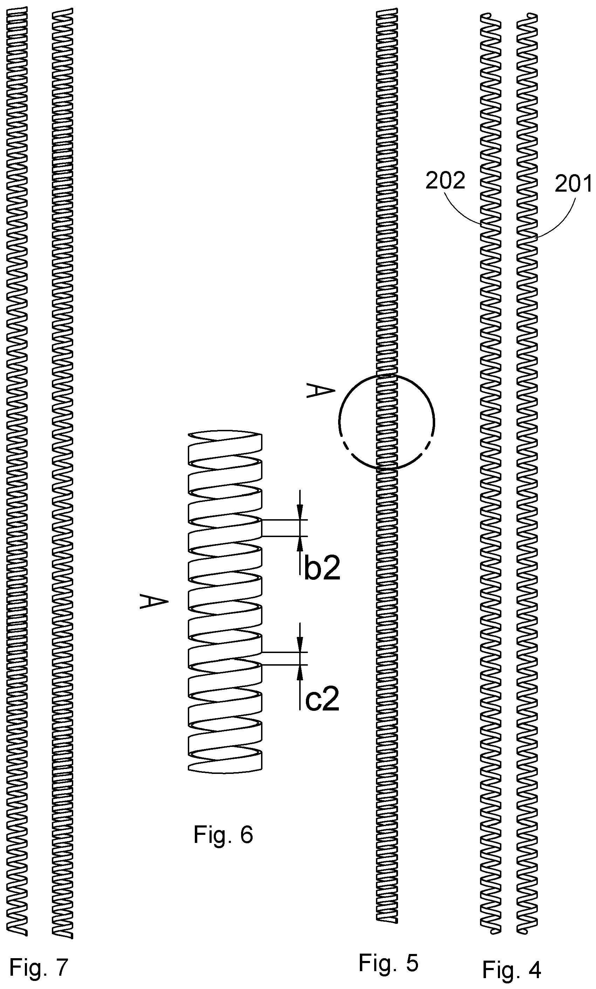

Figures FIG. 4-7 show embodiments of the shapes of the wooden spring that prevent wooden springs being side by side from getting by coils into each other.

Figure FIG. 4 shows the embodiments of the wooden springs having different coil directions, wherein a helix of the wooden spring 201 is right-handed, and a helix of the wooden spring 202 is left-handed

Figures FIG. 5-6 show an embodiment of a wooden spring having tight pitch coil. An average width b2 of a coil of the wooden spring is greater than the average distance c2 between the coils of the wooden spring.

Figure FIG. 7 shows embodiments of wooden springs having different variable pitch lengths.

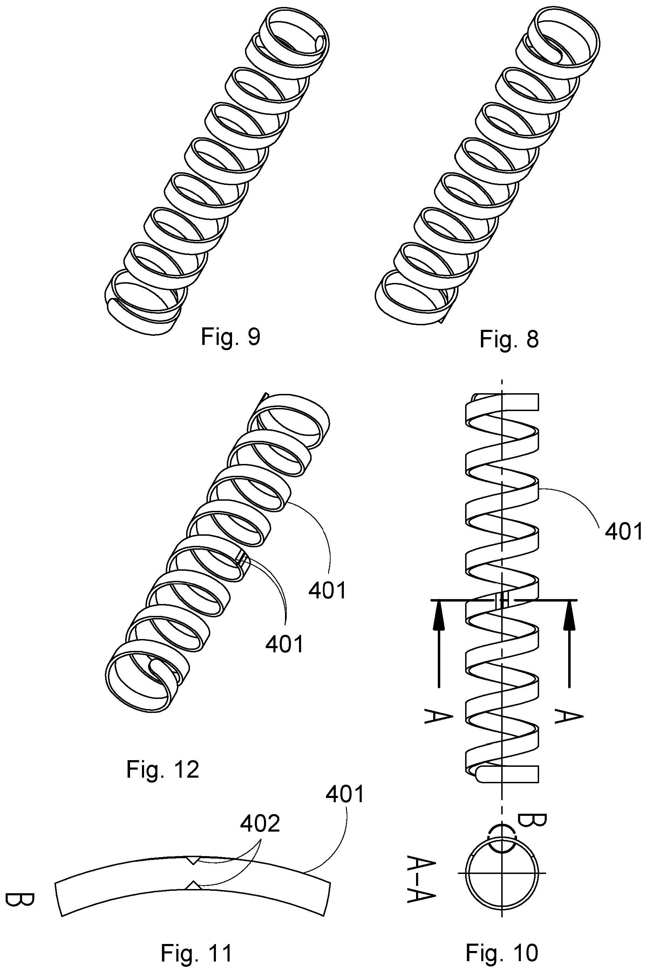

Figures FIG. 8-9 show three types of ends, which make the ends of the wooden springs safer, prevent the ends from getting stuck into each other and make them look more correct.

Figure FIG. 8 shows a wooden spring having a first type of end, wherein the ends of the wooden spring are turned next to the coils, i.e., the distances from the ends of the wooden spring to the coil of the wooden spring next to the end is less than the average length of the pitch of the wooden spring.

Figure FIG. 9 shows an embodiment of a wooden spring having a second and a third type of end, wherein one end is partially turned onto an inner side of the wooden spring and second end is partially turned onto an outer side of the wooden spring.

Figures FIG. 10-12 show an embodiment of a solution for splitting the wooden springs, wherein sides of the wooden spring **401** are provided with V-shaped incisions **402** to facilitate breaking of the wooden spring, which are marked on the outer side of the wooden spring **401** by markings **403** on either side of the incision **402,** which may be colored or burnt.

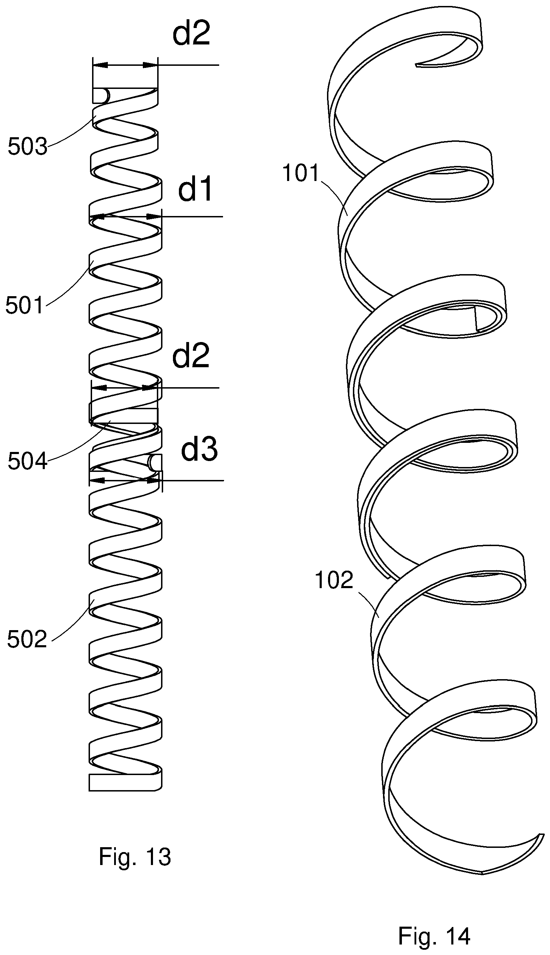

Figure FIG. 13 shows an embodiment of a solution of joining the wooden springs, wherein the average diameter **d2** of the upper end portions **503, 504** of the wooden springs **501, 502** is smaller than the average diameter d1 of the wooden springs **501, 502,** and the portion **504** of the smaller mean diameter **d2** of the lower wooden spring **502** is partially compressed into the upper wooden spring **501.** In this way, 2-1000 wooden springs can be connected in series, which in the case of a longer composite wooden spring are, for example, wound into a roll, and the user can easily separate sections of the timber spring by pulling.

FIG. 14 shows another embodiment, wherein two wooden springs are joined, wherein the two springs **101** and **102** are partially pushed into each other with their ends.

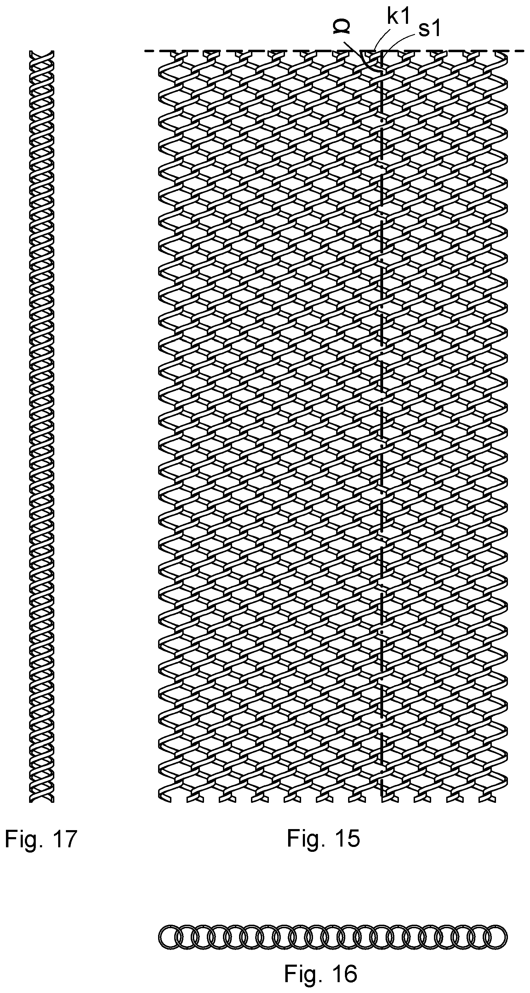

Figures FIG. 15-17 show an embodiment of a fabric material cross-woven from wooden springs with a circular cross-sectional shape. The wooden springs are interlaced together with two side wooden springs, forming an interlaced fabric of wooden springs.

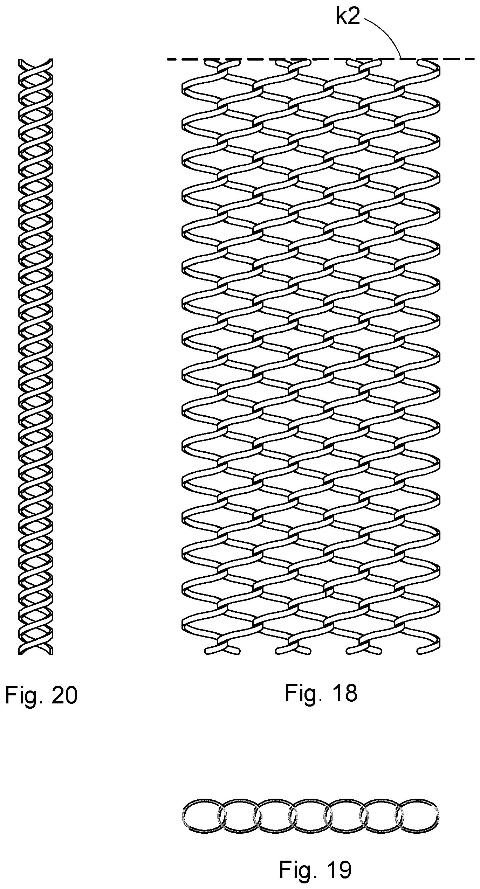

Figures FIG. 18-20 show an embodiment of a cross-woven fabric with an elliptical cross-sectional shape, which differs from the previous embodiment in that the cross-sectional shape of the wooden springs is elliptical.

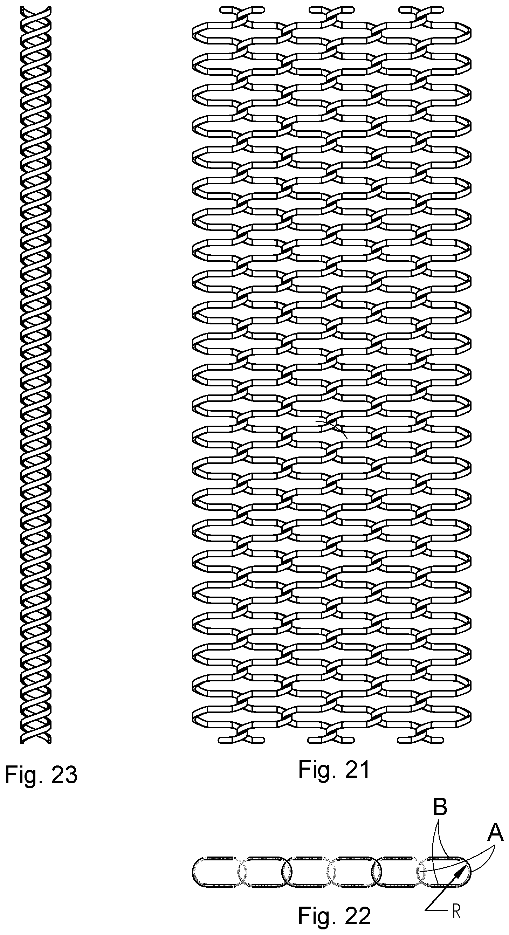

Figures FIG. 21-23 show an embodiment of a cross-woven fabric of wooden springs with a chain-link shaped cross-sectional shape, which differs from other embodiments in that the distribution profiles of the wooden springs are chain-link shaped.

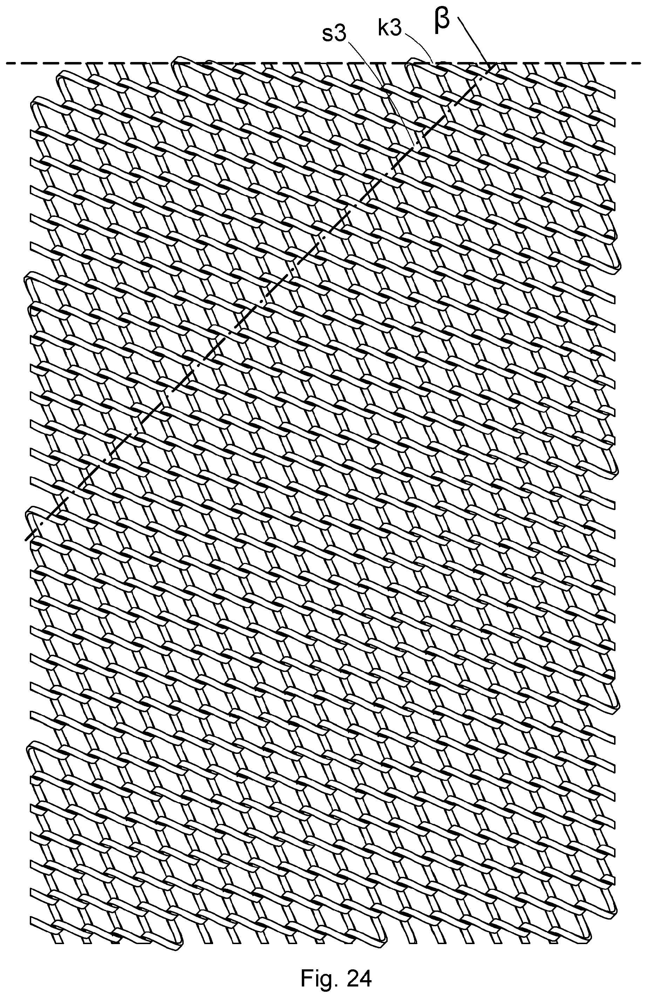

Figure FIG. 24 shows an embodiment of the wooden springs having circular cross-sectional shape, an embodiment of the wooden fabric interlaced of inclined wooden springs, that differs from the previous embodiments in that the wooden springs are interlaced at an angle.

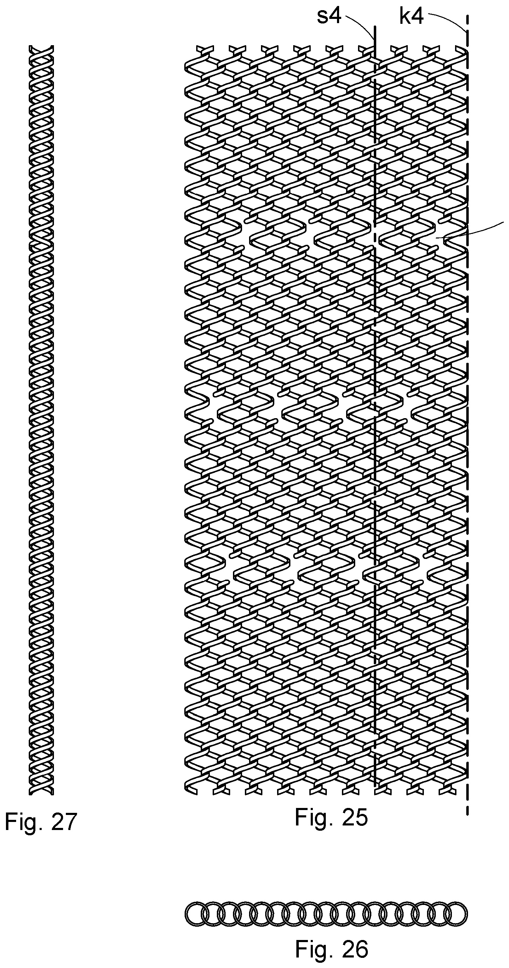

Figures FIG. 25-27 show an embodiment of a wooden spring having a circular cross-sectional shape, embodiment of longitudinally interlaced wooden fabric, which differs from the previous embodiments in that the wooden springs are longitudinally interlaced.

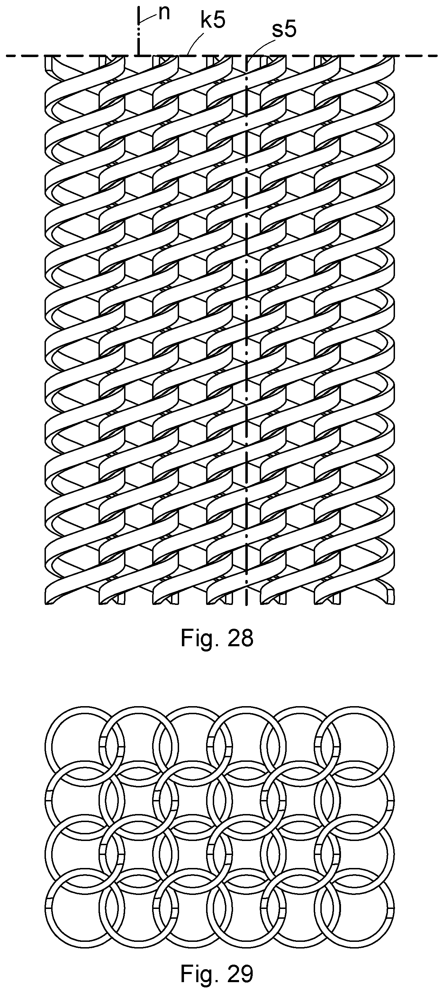

Figures FIG. 28 and 29 show an embodiment of the wooden fabric normal interlaced of the wooden springs having the circular cross-sectional shape, which differs from the previous embodiments in that the wooden springs are interlaced with each other by normal interlacing.

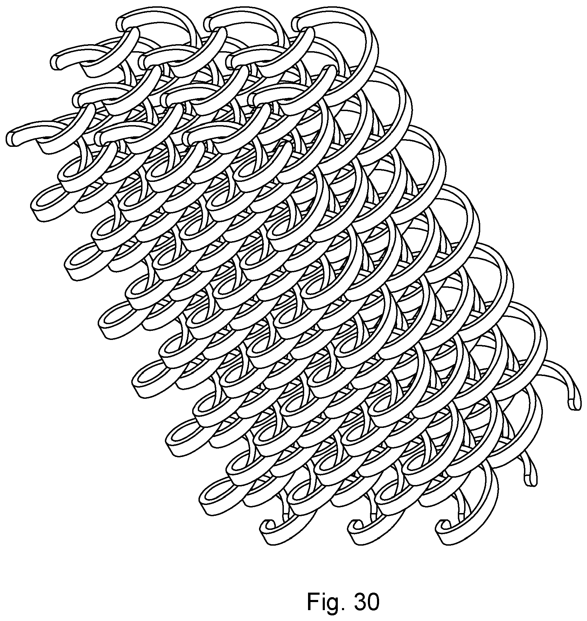

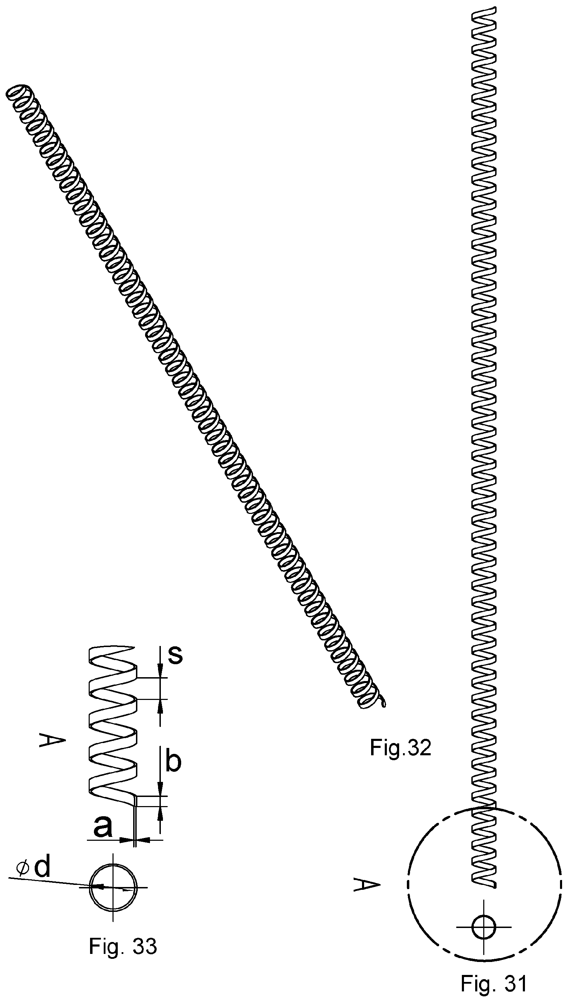

Figures FIG. 30-33 show a wooden spring from which wooden spring fabrics can be made. A thickness a of a coils the wooden springs a is 0.2-2.0 mm, preferably 0.4-0.6 mm, width b is 1-10 mm, preferably 3-6 mm, stretched out length I 0.1-5 meters (m), preferably 0.5-2 m. The wooden springs are made in helical, i.e., tension spring shape. The outer diameter of the coils of the wooden springs d is 6-60 mm, preferably 7-12 mm and the pitch of the coils of the wooden springs is 4-40 mm, preferably 5-10 mm.

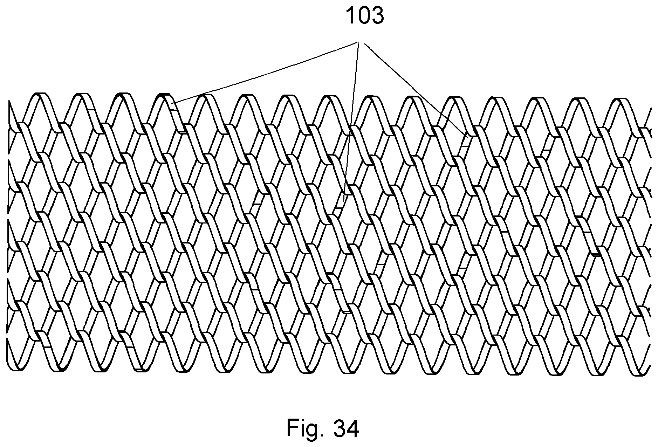

Figure FIG. 34 shows an embodiment of wooden spring fabric interlaced of wooden springs joined to each other, wherein **103** refers to joints within the wooden spring fabric.

The present disclosure is not limited to the embodiments shown in the figures and in the above embodiments, but may be embodied in other embodiments within the scope of the appended claims. The present disclosure is not limited to the embodiments shown in the drawings and the above embodiments, but includes terms referring to alternative embodiments and all possible combinations of embodiments with "circular cross-sectional shape", "elliptical cross-sectional shape", "chain-link shaped cross-sectional shape", "normal braided", "cross-braided", "longitudinally interlaced".

## Claims

1. A wooden spring formed of a strip of wood for forming wooden spring fabric, wherein the wooden spring has a homogeneous shape, the wooden springs are interlaceable side by side with at least two other wooden springs and the wooden spring comprises
- a helix having a first end and a second end, wherein the first end has diameter (d2) and the second end has diameter (d3), and
- plurality of coils between the first end and second end of the helix,
wherein
an average thickness (a) of the helix is 0.2-2.0 mm;
an average width (b, b2) of the helix is 2-10 mm;
an average diameter (d) of the coil is 6-60 mm;
an average pitch (s) of the coil is 4-40 mm; and
a stretched-out length (I) of the wooden spring is 10-5000 mm.

2. The wooden spring according to claim 1, wherein the average width (b, b2) is greater than an average distance (c2) between the two coils being side by side.

3. The wooden spring according to claim 1 or 2, wherein a position of the first end is different than a position of the second end, wherein the wooden spring comprises at least one of the following
- a distance of the first end or the second end from a first coil is less than the average pitch;
- the first end is at least partially turned onto an outer side of the wooden spring;
- the second end is at least partially turned onto an outer side of the wooden spring;
- the first end is at least partially turned onto an inner side of the wooden spring;
- the second end is at least partially turned onto an inner side of the wooden spring.

4. The wooden spring according to any of the preceding claims, wherein the average diameter (d2) of the first end of the wooden spring is smaller than the average diameter (d3) of the second end of the wooden spring.

5. The wooden spring according to any of the preceding claims, wherein the wooden spring comprises one or more breaking markers.

6. The wooden spring according to any of the preceding claims, wherein a cross-sectional shape of the wooden spring is circular, elliptical, chain-linked shaped.

7. A wooden spring fabric comprising the wooden springs according to any of claims 1 to 6, wherein two or more side by side wooden springs are interlaced to each other through the coils of the wooden springs.

8. The wooden spring fabric according to claim 7, wherein the interlaced wooden springs form a multi layered and/or multi columnar wooden spring fabric.

9. The wooden spring fabric according to claim 7 or 8, wherein the axes of the wooden springs in respect of the side of the wooden fabric is at angle α 70-115 degrees or angle β 25-65 degrees.

10. The wooden spring fabric according to any of claims 7-9, wherein the axes of the wooden springs are oriented in the direction of the longer side of the wooden fabric or oriented in the direction of the normal n of the side surface of the wooden spring fabric.

11. A use of the wooden spring fabric according to any one of claims 7 to 10 for packing material, for package filling material, for packaging, for making a curtain, for making a mattress, for making an interior or design elements.

## Patentansprüche

1. Holzfeder, die aus einem Holzstreifen ausgebildet ist, zum Ausbilden einer Holzfederstruktur, wobei die Holzfeder eine homogene Form aufweist, die Holzfedern nebeneinander mit mindestens zwei anderen Holzfedern verflechtbar sind und die Holzfeder umfasst
- eine Helix, die ein erstes Ende und ein zweites Ende aufweist, wobei das erste Ende Durchmesser (d2) und das zweite Ende Durchmesser (d3) aufweist, und
- eine Vielzahl von Windungen zwischen dem ersten Ende und dem zweiten Ende der Helix, wobei
eine durchschnittliche Dicke (a) der Helix 0,2-2,0 mm ist;
eine durchschnittliche Breite (b, b2) der Helix 2-10 mm ist;
ein durchschnittlicher Durchmesser (d) der Windung 6-60 mm ist;
eine durchschnittliche Steigung (s) der Windung 4-40 mm ist; und
die ausgestreckte Länge (I) der Holzfeder 10-5000 mm ist.

2. Holzfeder nach Anspruch 1, wobei die durchschnittliche Breite (b, b2) größer als ein durchschnittlicher Abstand (c2) zwischen den zwei nebeneinander liegenden Windungen ist.

3. Holzfeder nach Anspruch 1 oder 2, wobei sich eine Position des ersten Endes von einer Position des zweiten Endes unterscheidet, wobei die Holzfeder mindestens eines der Folgenden umfasst
- ein Abstand des ersten Endes oder des zweiten Endes von einer ersten Windung ist kleiner als die durchschnittliche Steigung;
- das erste Ende ist mindestens teilweise auf eine Außenseite der Holzfeder gedreht;
- das zweite Ende ist mindestens teilweise auf eine Außenseite der Holzfeder gedreht;
- das erste Ende ist mindestens teilweise auf eine Innenseite der Holzfeder gedreht;
- das zweite Ende ist mindestens teilweise auf eine Innenseite der Holzfeder gedreht.

4. Holzfeder nach einem der vorstehenden Ansprüche, wobei der durchschnittliche Durchmesser (d2) des ersten Endes der Holzfeder kleiner als der durchschnittliche Durchmesser (d3) des zweiten Endes der Holzfeder ist.

5. Holzfeder nach einem der vorstehenden Ansprüche, wobei die Holzfeder eine oder mehrere Bruchmarkierungen aufweist.

6. Holzfeder nach einem der vorstehenden Ansprüche, wobei eine Querschnittsform der Holzfeder kreisförmig, elliptisch oder kettengliedförmig ist.

7. Holzfederstruktur umfassend die Holzfedern nach einem der Ansprüche 1 bis 6, wobei zwei oder mehr nebeneinander liegende Holzfedern durch die Windungen der Holzfedern miteinander verflochten sind.

8. Holzfederstruktur nach Anspruch 7, wobei die verflochtenen Holzfedern eine mehrschichtige und/oder mehrsäulige Holzfederstruktur ausbilden.

9. Holzfederstruktur nach Anspruch 7 oder 8, wobei die Achsen der Holzfedern in Bezug auf die Seite der Holzstruktur in einem Winkel α von 70-115 Grad oder einem Winkel β von 25-65 Grad stehen.

10. Holzfederstruktur nach einem der Ansprüche 7-9, wobei die Achsen der Holzfedern in die Richtung der längeren Seite der Holzstruktur ausgerichtet sind oder in die Richtung der Normalen n der Seitenoberfläche der Holzfederstruktur ausgerichtet sind.

11. Verwendung der Holzfederstruktur nach einem der Ansprüche 7 bis 10 als Verpackungsmaterial, als Verpackungsfüllmaterial, zum Verpacken, zum Herstellen eines Vorhangs, zum Herstellen einer Matratze, zum Herstellen von Innenausstattungs- oder Designelementen.

## Revendications

1. Ressort en bois formé d'une bande de bois permettant de former un tissu de ressorts en bois, dans lequel le ressort en bois a une forme homogène, les ressorts en bois peuvent être entrelacés côte à côte avec au moins deux autres ressorts en bois et le ressort en bois comprend
- une hélice ayant une première extrémité et une seconde extrémité, dans lequel la première extrémité a un diamètre (d2) et la seconde extrémité a un diamètre (d3), et
- une pluralité d'enroulement entre la première extrémité et la seconde extrémité de l'hélice, dans lequel
une épaisseur moyenne (a) de l'hélice va de 0,2 à 2,0 mm ;
une largeur moyenne (b, b2) de l'hélice va de 2 à 10 mm ;
un diamètre moyen (d) de l'enroulement va de 6 à 60 mm ;
un pas moyen (s) de l'enroulement va de 4 à 40 mm ; et
une longueur étirée (I) du ressort en bois va de 10 à 5000 mm.

2. Ressort en bois selon la revendication 1, dans lequel la largeur moyenne (b, b2) est supérieure à une distance moyenne (c2) entre les deux enroulements disposés côte à côte.

3. Ressort en bois selon la revendication 1 ou 2, dans lequel une position de la première extrémité est différente d'une position de la seconde extrémité, dans lequel le ressort en bois comprend au moins l'une parmi les suivantes
- une distance entre la première extrémité ou la seconde extrémité et le premier enroulement est inférieure au pas moyen ;
- la première extrémité est au moins partiellement tournée vers un côté extérieur du ressort en bois ;
- la seconde extrémité est au moins partiellement tournée vers un côté extérieur du ressort en bois ;
- la première extrémité est au moins partiellement tournée vers un côté intérieur du ressort en bois ;
- la seconde extrémité est au moins partiellement tournée vers un côté intérieur du ressort en bois.

4. Ressort en bois selon l'une quelconque des revendications précédentes, dans lequel le diamètre moyen (d2) de la première extrémité du ressort en bois est inférieur au diamètre moyen (d3) de la seconde extrémité du ressort en bois.

5. Ressort en bois selon l'une quelconque des revendications précédentes, dans lequel le ressort en bois comprend un ou plusieurs repères de rupture.

6. Ressort en bois selon l'une quelconque des revendications précédentes, dans lequel une forme de section transversale du ressort en bois est circulaire, elliptique ou en forme de chaîne.

7. Tissu de ressorts en bois comprenant les ressorts en bois selon l'une quelconque des revendications 1 à 6, dans lequel deux ressorts en bois disposés côte à côte ou plus sont entrelacés les uns aux autres par les enroulements des ressorts en bois.

8. Tissu de ressorts en bois selon la revendication 7, dans lequel les ressorts en bois entrelacés forment un tissu de ressorts en bois multicouches et/ou multicolonnes.

9. Tissu de ressorts en bois selon la revendication 7 ou 8, dans lequel les axes des ressorts en bois forment, par rapport au côté du tissu en bois, un angle α allant de 70 à 115 degrés ou un angle β allant de 25 à 65 degrés.

10. Tissu de ressorts en bois selon l'une quelconque des revendications 7 à 9, dans lequel les axes des ressorts en bois sont orientés en direction du côté le plus long du tissu à base de bois ou sont orientés en direction de la normale n de la surface latérale du tissu de ressorts en bois.

11. Utilisation du tissu de ressorts en bois selon l'une quelconque des revendications 7 à 10 comme matériau d'emballage, comme matériau de remplissage d'emballage, comme emballage, pour la conception d'un rideau, pour la conception d'un matelas, pour la conception d'éléments d'intérieur ou de stylisme.
